# EUROPÄISCHE PATENTSCHRIFT

(11) **EP 2 698 060 B1**
(45) Veröffentlichungstag und Bekanntmachung des Hinweises auf die Patenterteilung: **11.03.2015**
(21) Anmeldenummer: 13401079.2
(22) Anmeldetag: 01.08.2013
(51) Int. Cl.: A01M 7/00

(54) **Landwirtschaftliche Feldspritze**
Agricultural field spraying device
Pulvérisateur agricole

(30) Priorität: 16.08.2012 DE 102012107492
(43) Veröffentlichungstag der Anmeldung: 19.02.2014
(73) Patentinhaber: Amazonen-Werke H. Dreyer GmbH & Co. KG, 49205 Hasbergen (DE)
(72) Erfinder: Austermann, Stefan, 48291 Telgte (DE)

(56) Entgegenhaltungen:
- EP-A1- 0 916 259
- EP-A1- 2 510 785

## Beschreibung

Die Erfindung betrifft eine landwirtschaftliche Feldspritze gemäß des Oberbegriffes des Patentanspruches 1.

Eine derartige landwirtschaftliche Feldspritze ist in beschrieben.

Derartige landwirtschaftliche Feldspritzen sind in der Praxis bekannt geworden, siehe z.B. EP-A-0 916 259. Diese Feldspritzen weisen einen Flüssigkeitstank auf. In diesem Flüssigkeitstank ist zu dessen Innenreinigung eine zumindest eine Reinigungsdüse aufweisende Reinigungseinrichtung angeordnet. Die Reinigungseinrichtung ist an den von der motorisch angetriebenen Pumpe erzeugten unter Druck stehenden Flüssigkeitsstromkreis angeschlossen. Von diesem Flüssigkeitsstromkreis wird den Reinigungsdüsen zur Innenreinigung Flüssigkeit zugeführt. Damit die aus den Reinigungsdüsen austretende Flüssigkeitsmenge an die Flüssigkeitsausbringmenge der Feldspritze angepasst ist, müssen bei den bekannten Feldspritzen entsprechend in ihrer Größe angepasste Reinigungsdüsen von Hand in die Halterungen der Reinigungseinrichtung eingebaut werden. Hierdurch werden verschiedene auf den Flüssigkeitsmengenausstoß der Ausbringdüsen angepasste Innenreinigungsdüsen an den Halterungen der Reinigungsvorrichtung eingebaut. Die Anpassung ist erforderlich, damit bei dem Ausbringvorgang, wenn die Innenreinigung des Flüssigkeitstanks durchgeführt wird, bei aktiver Innenreinigung ein ausreichendes Druckniveau an den Reinigungsdüsen zur Verfügung steht, um so eine ausreichende Reinigungswirkung erzielt zu können.

Der Erfindung liegt die Aufgabe zu Grunde, in einfacher Weise es zu ermöglichen, dass auch relativ geringer Flüssigkeitsmengenzufuhr zu den Reinigungsdüsen eine möglichst gute Reinigungswirkung des Inneren eines Flüssigkeitsbehälters einer Feldspritze in einfacher Weise erzielt werden kann.

Diese Aufgabe wird erfindungsgemäß dadurch gelöst, dass Mittel vorhanden sind, über welche den Reinigungsdüsen bei dem Reinigungsvorgang des inneren Bereiches des Flüssigkeitstanks innerhalb definierter Zeitintervalle die Reinigungsflüssigkeit in zumindest zwei fortlaufend einander abwechselnden Abschnittsbereichen zuführbar ist.

Infolge dieser Maßnahmen werden die Innenreinigungsdüsen in abwechselnder Weise so angesteuert, dass die aus den Innenreinigungsdüsen austretende Flüssigkeitsmenge trotz nur geringer Flüssigkeitsmenge immer mit einem ausreichend hohem Druck aus den Reinigungsdüsen austritt, so dass eine ausreichende Reinigung der Innenwände des Flüssigkeitstanks erreicht wird. Somit brauchen keine verschiedenen Düsen für unterschiedliche, auch geringen Ausbringmengen an der Innenreinigungsvorrichtung angebaut werden. Die Reinigung wird somit effizienter und mit weniger Wasser bei ausreichend hohem Druck möglich. Der Innenreinigungsvorgang lässt sich somit in einfacher Weise ohne Unterbrechung durchführen.

Um bei nur geringer zur Verfügung stehender Flüssigkeitsmenge bei der Durchführung der Innenreinigung bei einen ausreichend hohen Reinigungsdruck zu erreichen, ist vorgesehen, dass die Reinigungsdüsen zum fortlaufenden intervallweisen Ausstoßen von Reingungsflüssigkeit einzeln nacheinander in definierten Zeitabschnitten mittels geeigneter Mittel ansteuerbar sind.

Um bei nur geringer zur Verfügung stehender Flüssigkeitsmenge bei der Durchführung der Innenreinigung bei einen ausreichend hohen Reinigungsdruck zu erreichen, ist in einer weiteren Ausgestaltung vorgesehen, dass die Reinigungsdüsen zum fortlaufenden intervallweisen Ausstoßen von Reinigungsflüssigkeit gruppenweise zusammengefasst sind und die einzelnen gruppenweise zusammengefassten Reinigungsdüsen nacheinander in definierten Zeitabschnitten mittels geeigneter Mittel ansteuerbar sind.

Um in einfacher Weise zur Erreichung des ausreichend hohen Reinigungsdruckes die verschiedenen Reinigungsdüsen anzusteuern, ist vorgesehen, dass die Mittel zum intervallweisen Ausbringen der Reinigungsflüssigkeit durch die Reinigungsdüsen über eine elektronische Steuer- und/oder Regeleinrichtung ansteuerbare Ventilelemente, die der Reinigungseinrichtung und/oder den Reinigungsdüsen zugeordnet sind, sind.

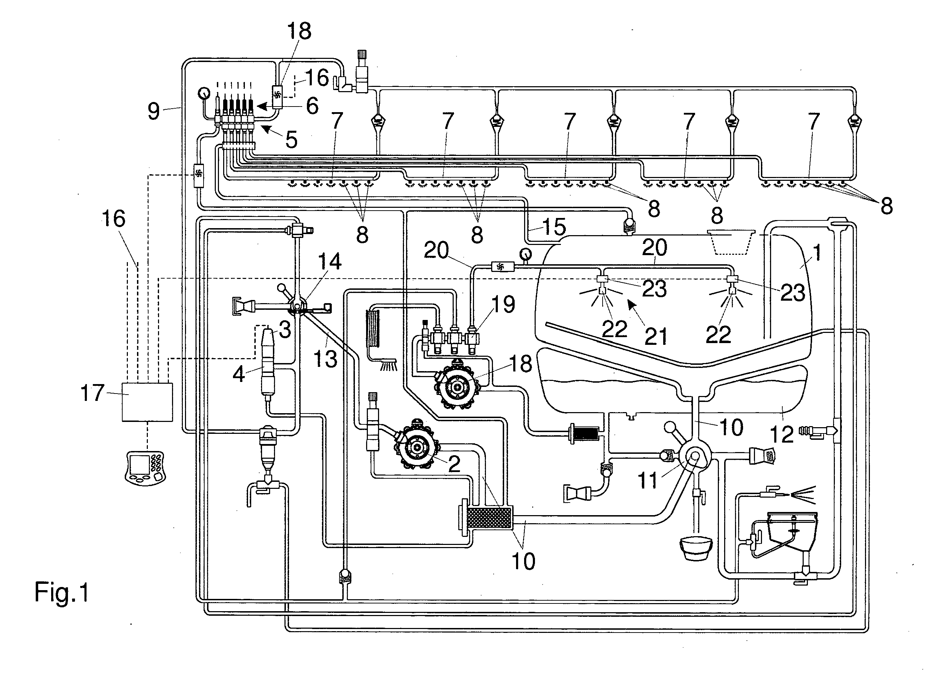

Weitere Einzelheiten der Erfindung sind der Beispielsbeschreibung und den Zeichnungen zu entnehmen.
Hierbei zeigen
- Fig. 1: den Flüssigkeitsplan einer Feldspritze in Prinzipdarstellung und

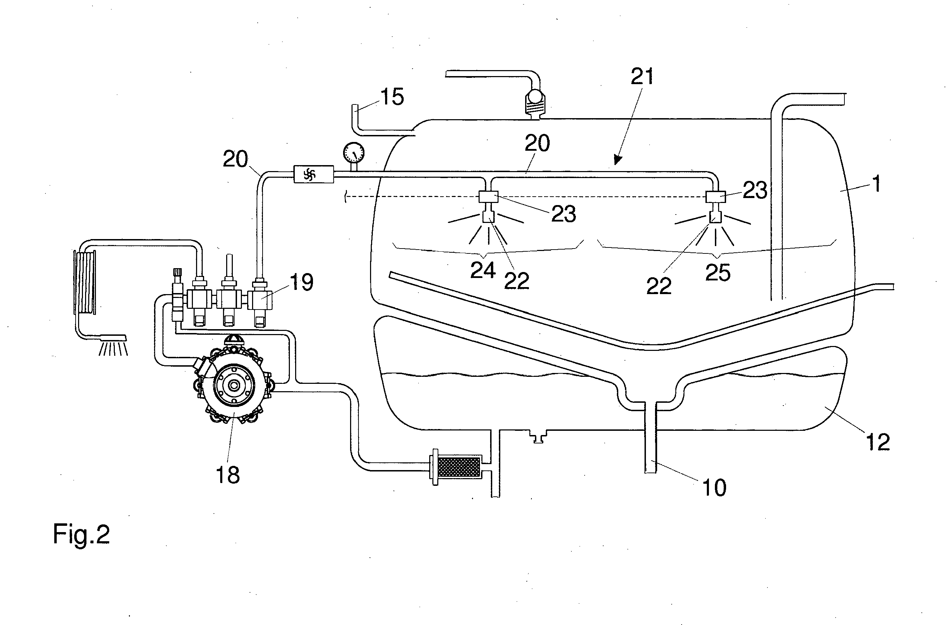

- Fig. 2: einen Teilbereich des Flüssigkeitsplanes gemäß Fig. 1.

Die Feldspritze weist unter anderem einen Flüssigkeitstank 1 zur Aufnahme der auszubringenden Pflanzenschutzmittelbrühe, eine motorisch angetriebene Pumpe 2, ein über einen Stellmotor 3 einstellbares Regelventil 4 aufweisende Dosierarmatur, die Teilbreitenschaltventile 5 mit den motorischen Einstellgliedern 6, die zu den einzelnen Teilbreitenleitungen 7 mit Spritzdüsen 8 bestückten Verteilergestänge führende Spritzleitung 9 auf.

Auf der Saugseite der Pumpe 2 ist die Saugleitung 10 angeschlossen, die unter Zwischenschaltung eines zentralen Umschaltventils 11 im unteren Bereich des Flüssigkeitstank 1 mündet. An dem Umschaltventil 11 können noch weitere Leitungen zum externen Anschluss von Wassertanks, Vorrichtungen zum Ansaugen von Wasser aus Gewässern, zum Anschluss des Klarwasserbehälters 12 sowie eine Ablaufleitung angeschlossen sein. Auf der Druckseite der Pumpe 2 ist eine Druckleitung 13 angeordnet, die unter Zwischenschaltung eines weiteren Umschaltventils 14 zu dem Regelventil 4 der Dosierarmatur und weiterer Einrichtungen der Feldspritze führt. Die verschiedenen Rücklaufleitungen sind zu einer Sammelrücklaufleitung 15 zusammengefasst. Die Rücklaufleitung 15 mündet in dem Vorratstank 1.

In der von den dem Regelventil 4 zu den Teilbreitenleitungen 7 führenden Spritzleitung 9 ist der über die Signalleitung 16 mit der elektronischen Steuer- und/oder Regeleinrichtung 17 verbundene Durchflussmesser 18 angeordnet.

Unterhalb des Flüssigkeitstanks 1 ist der Klarwasserbehälter 12 zur Aufnahme von Klarwasser angeordnet. Diesem Klarwasserbehälter 12 ist eine zweite Pumpe 18, Regelventile 19 sowie die von den Regelventilen 19 abgehende Reinigungsleitung 20 einer Reinigungseinrichtung 21 für die Innenreinigung des Flüssigkeitstanks 1 auf. An der Reinigungsleitung 20 sind im Flüssigkeitstank 1 mehrere Reinigungsdüsen 22 angeordnet.

In der Reinigungsleitung 20 sind über die elektronische Steuer- und/oder Regeleinrichtung 17 ansteuerbare Ventilelemente 23 der Reinigungseinrichtung 21 angeordnet. An den Ventilelementen 23 sind die Reinigungsdüsen 22 angeordnet. Mittels der von der elektronische Steuer- und/oder Regeleinrichtung 17 ansteuerbaren Ventilelemente 23 wird den Innenreinigungsdüsen 22 bei dem Reinigungsvorgang des inneren Bereiches des Flüssigkeitstanks 1 Flüssigkeit zugeführt und zwar derart, dass den Reinigungsdüsen 22 bei dem Reinigungsvorgang des inneren Bereiches des Flüssigkeitstanks 1 innerhalb definierter Zeitintervalle die Reinigungsflüssigkeit in zumindest zwei fortlaufend einander abwechselnden Abschnittsbereichen 24, 25 zugeführt wird.

Über die abwechselnd angesteuerten Ventilelemente 23 wird der für den Reinigungsvorgang erforderliche Betriebsmitteldruck, mit dem die Reinigungsflüssigkeit aus den Innenreinigungsdüsen 22 jeweils austreten soll auch bei geringeren zugeführten Flüssigkeitsmengen aufrechterhalten. Hierzu werden die Reinigungsdüsen 22 zum fortlaufenden intervallweisen Ausstoßen von Reingungsflüssigkeit einzeln nacheinander in definierten Zeitabschnitten durch die elektronische Steuer- und/oder Regeleinrichtung 17 angesteuert.

Bei einer Vielzahl von Reinigungsdüsen 22 zum fortlaufend en intervallweisen Ausstoßen von Reingungsflüssigkeit sind diese in nicht dargestellter Weise gruppenweise zusammengefasst und die gruppenweise zusammengefassten Reinigungsdüsen 22 werden dann nacheinander in definierten Zeitabschnitten mittels der elektronischen Steuer- und/oder Regeleinrichtung 17 entsprechend angesteuert.

## Patentansprüche

1. Landwirtschaftliche Feldspritze mit zumindest einem Flüssigkeitstank (1), einer angetriebenen Flüssigkeitspumpe (2), zumindest einer Dosiereinrichtung (4) mit zumindest einer zugeordneten Ausbringleitung und zumindest einer dem Flüssigkeitstank zu dessen Innenreinigung mehrere Reinigungsdüsen (22) aufweisenden Reinigungseinrichtung zur Ausbringung von Reinigungsflüssigkeit, **dadurch gekennzeichnet, dass** Mittel (17, 23) vorhanden sind, über welche den Reinigungsdüsen (22) bei dem Reinigungsvorgang des inneren Bereiches des Flüssigkeitstanks (1) innerhalb definierter Zeitintervalle die Reinigungsflüssigkeit in zumindest zwei fortlaufend einander abwechselnden Abschnittsbereichen (24, 25) zuführbar ist.

2. Landwirtschaftliche Feldspritze nach Anspruch 1, **dadurch gekennzeichnet, dass** die Reinigungsdüsen (22) zum fortlaufenden intervallweisen Ausstoßen von Reingungsflüssigkeit einzeln nacheinander in definierten Zeitabschnitten mittels geeigneter Mittel (17, 23) ansteuerbar sind.

3. Landwirtschaftliche Feldspritze nach Anspruch 1, **dadurch gekennzeichnet, dass** die Reinigungsdüsen (22) zum fortlaufend en intervallweisen Ausstoßen von Reingungsflüssigkeit gruppenweise zusammengefasst sind und die einzelnen gruppenweise zusammengefassten Reinigungsdüsen (22) nacheinander in definierten Zeitabschnitten mittels geeigneter Mittel (17, 23) ansteuerbar sind.

4. Landwirtschaftliche Feldspritze nach zumindest einem der vorstehenden Ansprüche, **dadurch gekennzeichnet, dass** die Mittel zum intervallweisen Ausbringen der Reinigungsflüssigkeit durch die Reinigungsdüsen (22) über eine elektronische Steuer- und/oder Regeleinrichtung (17) ansteuerbare Ventilelemente (23), die der Reinigungseinrichtung und/oder den Reinigungsdüsen (22) zugeordnet sind, sind.

## Claims

1. Agricultural field spraying device with at least one liquid tank (1), a driven liquid pump (2), at least one metering device (4) having at least one associated discharge line, and with at least one cleaning device, which has a plurality of cleaning nozzles (22) in the liquid tank for the internal cleaning thereof, for discharging cleaning liquid, **characterized in that** there are means (17, 23), via which the cleaning nozzles (22) can be supplied with the cleaning liquid within defined time intervals during the cleaning operation of the interior region of the liquid tank (1) in at least two section regions (24, 25) alternating with each other continuously.

2. Agricultural field spraying device according to Claim 1, **characterized in that** the cleaning nozzles (22) are activatable individually in succession in defined periods of time by means of suitable means (17, 23) for the continuous ejection of cleaning liquid at intervals.

3. Agricultural field spraying device according to Claim 1, **characterized in that** the cleaning nozzles (22) are combined in groups for the continuous ejection of cleaning liquid at intervals and the individual cleaning nozzles (22) which are combined in groups are activatable in succession in defined periods of time by means of suitable means (17, 23).

4. Agricultural field spraying device according to at least one of the preceding claims, **characterized in that** the means for discharging the cleaning liquid at intervals through the cleaning nozzles (22) are valve elements (23) which are activatable via an electronic control and/or regulating device (17) and are assigned to the cleaning device and/or to the cleaning nozzles (22) .

## Revendications

1. Pulvérisateur agricole comprenant au moins un réservoir de liquide (1), une pompe de liquide entraînée (2), au moins un dispositif de dosage (4) comprenant au moins une conduite de distribution associée et au moins un dispositif de nettoyage, pour le réservoir de liquide présentant plusieurs buses de nettoyage (22) pour son nettoyage interne, pour la distribution de liquide de nettoyage, **caractérisé en ce que** des moyens (17, 23) sont prévus, par le biais desquels le liquide de nettoyage peut être acheminé aux buses de nettoyage (22) au cours de l'opération de nettoyage de la région interne du réservoir de liquide (1) à l'intérieur d'intervalles de temps définis dans au moins deux régions partielles (24, 25) alternant de manière successive.

2. Pulvérisateur agricole selon la revendication 1, **caractérisé en ce que** les buses de nettoyage (22) peuvent être commandées individuellement les unes après les autres pour l'éjection, à intervalles successifs, de liquide de nettoyage à des intervalles de temps définis à l'aide de moyens appropriés (17, 23).

3. Pulvérisateur agricole selon la revendication 1, **caractérisé en ce que** les buses de nettoyage (22) sont réunies par groupes pour l'éjection, à intervalles successifs, de liquide de nettoyage et les buses de nettoyage individuelles (22) réunies par groupes peuvent être commandées les unes après les autres à des intervalles de temps définis à l'aide de moyens appropriés (17, 23).

4. Pulvérisateur agricole selon au moins l'une des revendications précédentes, **caractérisé en ce que** les moyens pour la distribution à intervalles du liquide de nettoyage par les buses de nettoyage (22) sont des éléments de soupape (23) pouvant être commandés par le biais d'un dispositif de commande et/ou de régulation électronique (17), lesquels éléments de soupape sont associés au dispositif de nettoyage et/ou aux buses de nettoyage (22).
